(19) Europäisches Patentamt
European Patent Office
Office européen des brevets

(11) **EP 4 386 314 A1**

(12) **EUROPEAN PATENT APPLICATION**

(43) Date of publication:
**19.06.2024 Bulletin 2024/25**

(21) Application number: **23215800.6**

(22) Date of filing: **12.12.2023**

(51) International Patent Classification (IPC):
**G01B 11/245** (2006.01) **G01B 21/04** (2006.01)
**G01B 11/25** (2006.01)

(52) Cooperative Patent Classification (CPC):
**G01B 11/245; G01B 11/2504; G01B 21/042**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.12.2022 PL 44311622**

(71) Applicant: **Centrum Badan i Rozwoju Technologii dla Przemyslu S.A.
00-645 Warszawa (PL)**

(72) Inventors:
• **Rotter, Pawel
31-003 Krakow (PL)**

• **Klemiato, Maciej
30-009 Krakow (PL)**
• **Rosol, Maciej
32-300 Olkusz (PL)**
• **Knapik, Dawid
32-300 Osiek (PL)**
• **Putynkowski, Grzegorz
00-193 Warszawa (PL)**
• **Kordaczek, Rafal
44-290 Jejkowice (PL)**
• **Wozny, Krzysztof
34-220 Makow Podhalanski (PL)**
• **Andrysiewicz, Wojciech
30-347 Krakow (PL)**

(74) Representative: **Kancelaria Eupatent.pl Sp. z.o.o
Ul. Kilinskiego 185
90-348 Lodz (PL)**

(54) **A METHOD FOR CALIBRATING A SET OF LASER PROFILOMETERS**

(57) A method for calibrating a set of laser profilometers, comprising the steps of: providing (41) at least two profilometers (11-14); providing (42) a calibration standard (20) having at least six reference points (21-26); scanning (43) the calibration standard (20) with the profilometers (11-14) such that at least six of the same reference points (21-26) are visible on scans made by at least two of the profilometers (11-14); detecting (44) the position of the reference points (21-26) in the three axes (X, Y, Z) for each profilometer (11-14) on its corresponding scan, and defining their positions relative to the specified profilometer (11-14) in the local coordinate system of the particular profilometer; sorting (45) the scanned reference points (21-26) by assigning a label to each point in such a way that each scan comprises the same labels for the same reference point (21-26); and calculating (46) a transformation matrix for the coordinates of the reference points of each profilometer in order to transform these coordinates from the local coordinate system of each profilometer to the external coordinate system.

Fig. 6

EP 4 386 314 A1

**Description**

TECHNICAL FIELD

The present invention pertains to the calibration of laser profilometers.

BACKGROUND

Laser profilometers, also known as laser triangulation sensors, are employed in quality control processes to evaluate the geometric parameters of moving objects, such as those transported on conveyor belts within the field of view of the profilometers.

The operational principle of a laser profilometer involves projecting a laser beam onto an object under examination and focusing the reflected light onto a light-sensitive matrix. The position of the reflected laser light spot on the photosensitive matrix, combined with knowledge of the geometry of the device, enables the determination of the height of the object. Moreover, using a laser line instead of a light spot for measurement provides information about the object's profile, thereby providing 2D data. The object's movement relative to the profilometer enables the acquisition of a height map (a point cloud) of the object, yielding 3D data. The resulting data are described in the local coordinate system associated with the mounting of the profilometer.

For accurate measurement, the laser beam must not be obscured. The shape of the object under examination may prevent the projected laser beam from reaching the entire surface of the object or prevent the reflected laser beam from reaching the detector of the profilometer. To counter this, a set of laser profilometers mounted in different orientations relative to the object may be used. In this case, each profilometer will provide geometric data of the object in its local coordinate system. To interpret these data correctly, it is necessary to import the measurement data into a common coordinate system.

Various algorithms are known for bringing point clouds into a common coordinate system (point cloud registration), such as the Iterative Closest Point (ICP) algorithm. However, the available methods for bringing point clouds into a common coordinate system require lengthy computation times.

Commercially available methods for calibrating a set of laser profilometers exist, but their capability is limited to searching for 2D transformations (one rotation and two 3DoF translations), which limits the sensor assembly capabilities.

For instance, a Chinese patent CN105806309B discloses a system and method for calibrating a robot's zero point based on laser triangulation. The system comprises three designators installed around a rigid base at any position in the robot environment, and three calibration objects located at the end of the robot body (arm) facing the corresponding designators. Each designator comprises two laser displacement sensors with an absolute displacement measurement function. The readings from the two laser triangulation displacement sensors are directly transmitted to the controller to perform zero position calibration of the robot.

SUMMARY OF THE INVENTION

There is a need for a method to calibrate a set of laser profilometers that would allow them to be freely mounted relative to each other (three rotations and three translations - six degrees of freedom).

The invention relates to a method for calibrating a set of laser profilometers, comprising the steps of: providing at least two profilometers ; providing a calibration standard having at least six reference points ; scanning the calibration standard with the profilometers such that at least six of the same reference points are visible on scans made by at least two of the profilometers ; detecting the position of the reference points in the three axes (X, Y, Z) for each profilometer on its corresponding scan, and defining their positions relative to the specified profilometer in the local coordinate system of the particular profilometer; sorting the scanned reference points by assigning a label to each point in such a way that each scan comprises the same labels for the same reference point ; and calculating a transformation matrix for the coordinates of the reference points of each profilometer in order to transform these coordinates from the local coordinate system of each profilometer to the external coordinate system.

The method may comprise scanning the calibration standard by moving it with a conveyor belt in the Y axis relative to the profilometers , and sorting the scanned reference points in the axis of movement (Y) of the calibration standard .

The reference points may have a circular shape.

The external coordinate system may correspond to one of the local coordinate systems of the specified profilometer.

The method according to the present invention does not require maintaining fixed and predetermined positions of the profilometers. Therefore, before calibration, the positions of the profilometers are not entered into the system, and the profilometers may be positioned in different planes relative to each other. Each profilometer may be mounted at different X, Y, Z positions and may be tilted with respect to the three X, Y, Z axes, which translates into the ability to freely select the positions of the profilometers with six degrees of freedom.

These and other features, aspects and advantages of the invention will become better understood with reference to the following drawings, descriptions and claims.

BRIEF DESCRIPTION OF DRAWINGS

The object of the invention is illustrated by means of example embodiments in the drawing, wherein:

Fig. 1A shows an example of the arrangement of a set of profilometers over a calibration standard;
Fig. 1B shows the scanning planes of the first pair of profilometers;
Fig. 1C shows the scanning planes of the second pair of profilometers;
Fig. 2 shows an example of the calibration standard;
Fig. 3 shows an example image of the intensity of the received signal for each measured point;
Fig. 4 shows a view of the four point clouds taken by the four profilometers;
Fig. 5 shows an image of the sorted and numbered reference points for each profilometer;

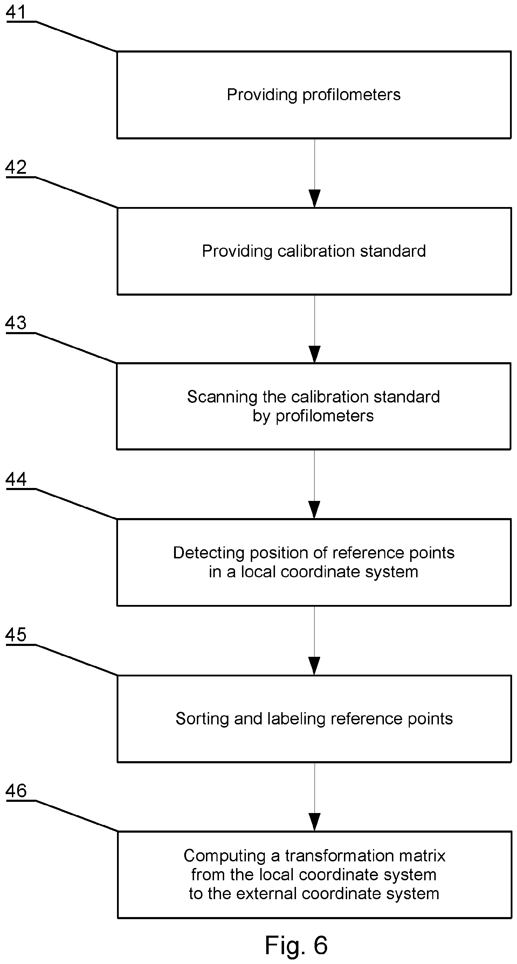

Fig. 6 shows the steps of how to calibrate a set of laser profilometers.

DETAILED DESCRIPTION

The following detailed description is of the best currently contemplated modes of carrying out the invention. The description is not to be taken in a limiting sense but is made merely for the purpose of illustrating the general principles of the invention.

The present invention relates to a method for calibrating a set of laser profilometers (triangulation distance sensors) in which the profilometers are fixed in different orientations with respect to the object under test and with respect to each other.

Initially, at least two profilometers 11-14 are provided in step 41 and a calibration standard 20 having at least six reference points 21-26 is provided in step 42. The reference points 21-26 have a circular shape. For instance, the reference points are in the form of circular stickers with a diameter of 0.8 mm containing a white circle surrounded by a black border. However, other shapes may be used to mark reference points, such as Aruco markers.

The calibration standard 20 is then scanned in step 43 using the profilometers 11-14 in such a way that at least six of the same reference points 21-26 are visible on scans taken by at least two of the profilometers 11-14.

The calibration standard 20 is scanned by moving it by means of a conveyor belt 30 in the Y-axis relative to the profilometers 11-14, and the scanned reference points 21-26 are sorted in the Y-axis of movement of the calibration standard 20. Thus, it is possible to carry out automatic calibration using the conveyor belt already present on the machine, which is used during production to move the parts to be checked. Therefore, there is no need for special stands or racks to hold the calibration standard.

Then, for each profilometer 11-14, the position of the reference points 21-26 in the three axes X, Y, Z is detected in step 44 on the corresponding scan, and their positions relative to the specified profilometer 11-14 are defined in the local coordinate system of the respective profilometer.

After that, the scanned reference points 21-26 are sorted in step 45 by giving each point a label in such a way that each scan comprises the same labels for the same reference point 21-26.

In the final step 46, a transformation matrix is calculated for the coordinates of the reference points of each profilometer to transform these coordinates from the local coordinate system of each profilometer to the external coordinate system. The external coordinate system may be the same as one of the local coordinate systems of a specific profilometer.

For instance, the calibration standard 20 constitutes a metal plate of 200 mm × 150 mm × 60 mm, on which there are thirteen reference points. The reference points 21-26 are spaced at different heights using as large an area of the plate as possible. The dimensions of the calibration standard 20 should be adapted to the measurement range of the used profilometers 11-14.

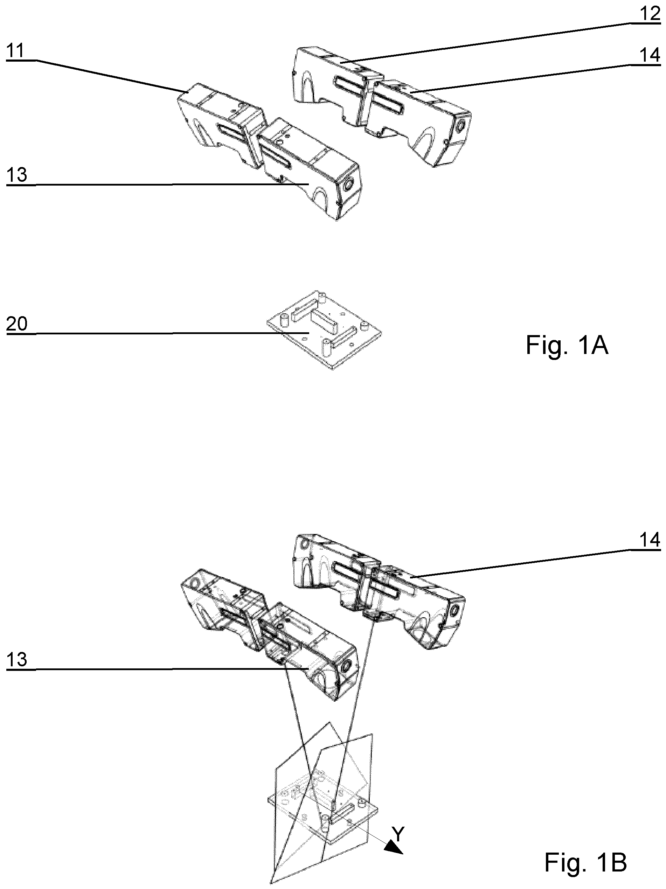

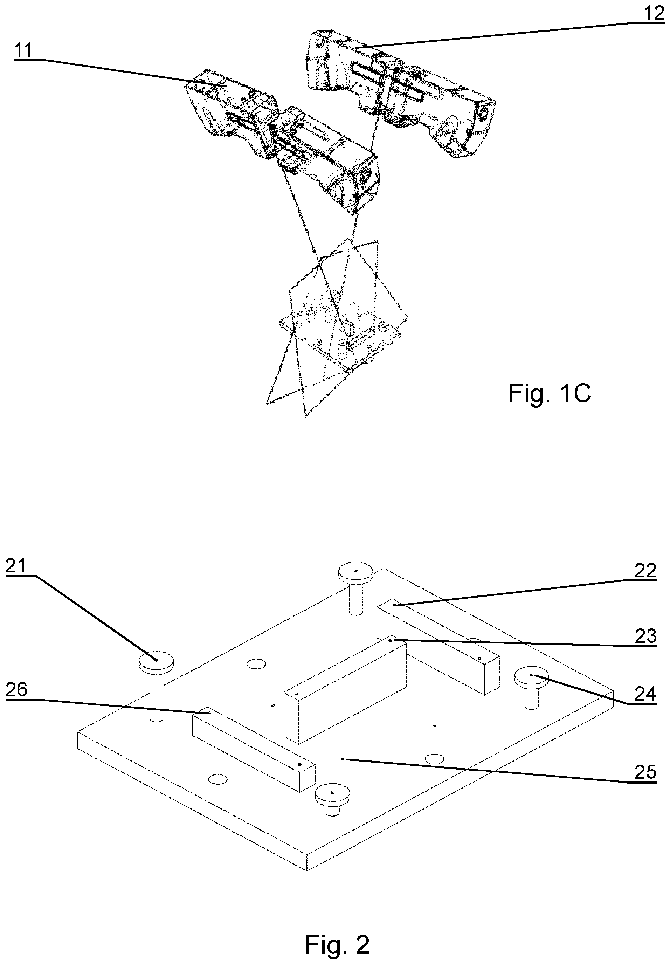

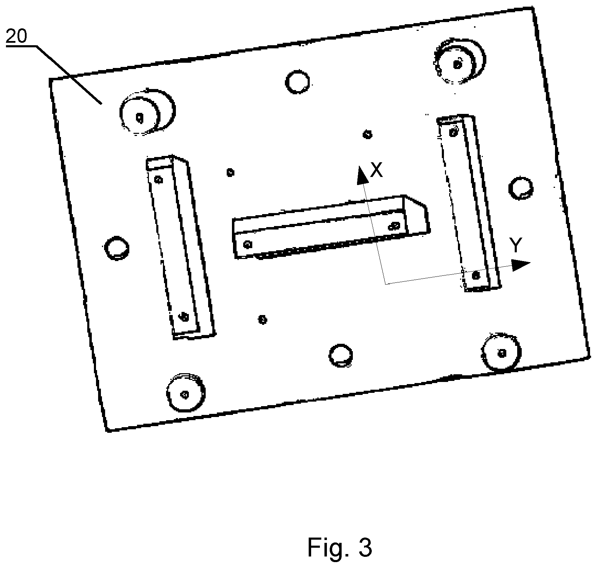

In the embodiment example shown below, four laser profilometers 11-14 are used. The calibration standard 20 is scanned by a set of four profilometers 11-14 placed over a conveyor belt (Fig. 1a-1c). The conveyor belt provides Y-axis movement of the calibration standard 20. As a result, the scan produces four point clouds (Fig. 3) with the geometric dimensions of the calibration standard 20 and four monochromatic images with information on the intensity of the reflected light for each measured point. In the scans, the height of the points is rearranged by color (for example, yellow indicates points that are high up - and therefore closer to a given profilometer - and blue indicates points that are low down - and therefore further away from a given profilometer). In each scan image, the calibration standard 20 and the conveyor belt 30 can be seen. The conveyor belt 30 is not represented by a regular surface due to the unevenness of the surface reflection and the conveyor's location outside the working area of the sensors (since it is not the object of interest, the imaging settings of the profilometers are selected for the calibration standard). It is worth noting that in the images the calibration standard 20 and the conveyor 30 are tilted - however, in reality, it is the profilometers 11-14 that are tilted relative to the leveled conveyor.

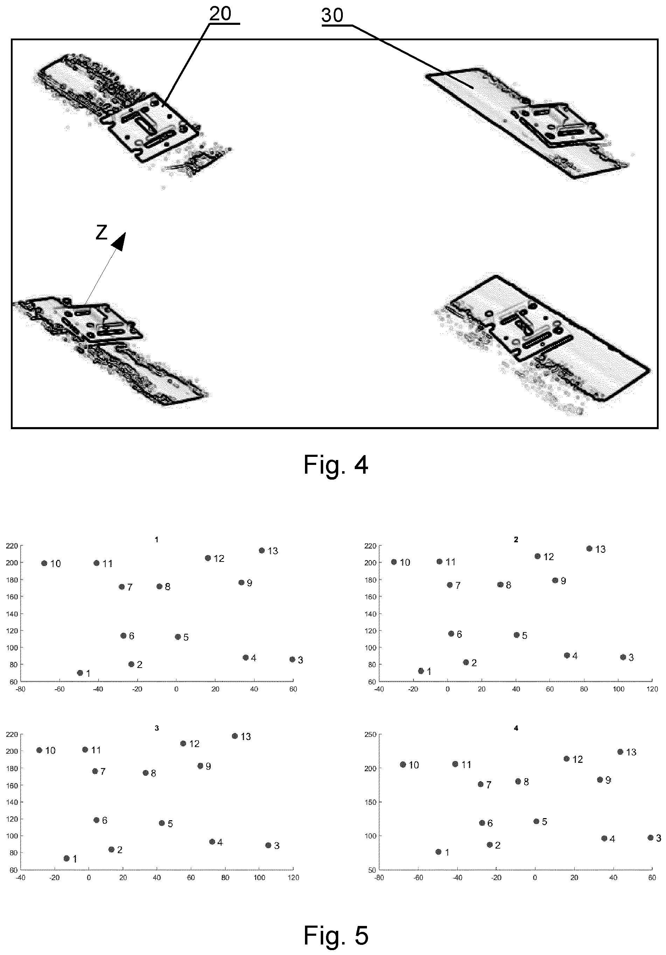

Using the Hough transform to detect circles (in the example shown, the reference points are circular), the X, Y coordinates of each reference point can be found in the intensity images (Fig. 3). The Z coordinate of each reference point can then be read from the elevation map (Fig. 4). Since the reference points 21-26 are determined with sub-pixel accuracy then the determination of the Z coordinate is done by interpolating the plane based on the three closest points of the determined reference point center.

After performing the above operations, a set of X, Y, Z coordinates of each reference point is obtained. In the example shown, there are thirteen points and therefore 4x13 coordinates of points (for each profilometer). Then a sorting of the reference points is performed by giving each point a label in such a way that each scan comprises the same labels for the same reference point. In other words, for example, so that the point located in the lower left corner of the calibration standard is labeled with the same label on scans taken by different laser profilometers. Sorting along the Y-axis (that is, along the axis of movement of the calibration standard - each profilometer scans the points in the same order) is sufficient (Fig. 5).

Upon receipt of the sorted coordinates of the reference points within the profilometer system, a transformation matrix is computed. The following calculations are performed for each profilometer:

Table 1

|  | Non-Homogeneous | Homogeneous |
|---|---|---|
| Coordinates in the profilometer system | X, Y, Z | $P_1, P_2, P_3, P_4$ |
| Coordinates in the external system | x, y, z | $p_1, p_2, p_3, p_4$ |

During online operation, the following conversion is performed as follows: p = M P, where M represents the coordinate transformation matrix from the profilometer system to the external system;

Given that $P_4=1$, it follows that $(X, Y, Z) = (P1, P2, P3)$

$$x=p_1/p_4=(m_{11}X+m_{12}Y+m_{13}Z+m_{14}) / (m_{41}X+m_{42}Y+m_{43}Z+m_{44})$$

$$y=p_2/p_4=(m_{21}X+m_{22}Y+m_{23}Z+m_{24}) / (m_{41}X+m_{42}Y+m_{43}Z+m_{44})$$

$$z=p_3/p_4=(m_{31}X+m_{32}Y+m_{33}Z+m_{34}) / (m_{41}X+m_{42}Y+m_{43}Z+m_{44})$$

The equations are written in the form:

$$Cm = 0$$

where m represents a column vector composed of the elements of the matrix M:

$$m=[\, m_{11}, m_{12}, m_{13, } ...., m_{43}, m_{44} \,]^T.$$

Each calibration point generates three rows of a matrix $C_{3N \times 16}$ where N represents the number of calibration points, and $N \geq 6$.

In the equation below, each set of three rows corresponds to consecutive calibration points. For simplicity, the indices of the calibration points at the variables X, Y, Z, x, y, z are omitted.

$$\begin{bmatrix} X & Y & Z & 1 & 0 & 0 & 0 & 0 & 0 & 0 & 0 & 0 & -xX & -xY & -xZ & -x \\ 0 & 0 & 0 & 0 & X & Y & Z & 1 & 0 & 0 & 0 & 0 & -yX & -yY & -yZ & -y \\ 0 & 0 & 0 & 0 & 0 & 0 & 0 & 0 & X & Y & Z & 1 & -zX & -zY & -zZ & -z \\ X & Y & Z & 1 & 0 & 0 & 0 & 0 & 0 & 0 & 0 & 0 & -xX & -xY & -xZ & -x \\ 0 & 0 & 0 & 0 & X & Y & Z & 1 & 0 & 0 & 0 & 0 & -yX & -yY & -yZ & -y \\ 0 & 0 & 0 & 0 & 0 & 0 & 0 & 0 & X & Y & Z & 1 & -zX & -zY & -zZ & -z \\ & & & & & & & & \cdots \\ & & & & & & & & \cdots \\ X & Y & Z & 1 & 0 & 0 & 0 & 0 & 0 & 0 & 0 & 0 & -xX & -xY & -xZ & -x \\ 0 & 0 & 0 & 0 & X & Y & Z & 1 & 0 & 0 & 0 & 0 & -yX & -yY & -yZ & -y \\ 0 & 0 & 0 & 0 & 0 & 0 & 0 & 0 & X & Y & Z & 1 & -zX & -zY & -zZ & -z \end{bmatrix} \begin{bmatrix} m_{11} \\ m_{12} \\ \\ m_{43} \\ m_{44} \end{bmatrix} = 0$$

The kernel of the matrix C is then calculated using Singular Value Decomposition (SVD), by decomposing the matrix C into a product of three matrices: $C = U\Sigma V^{T}$ with certain properties. The kernel of C is the columns of the matrix V, for which the corresponding values of the diagonal matrix $\Sigma$ are equal to 0. Based on the last column of the matrix V, a transformation matrix to an external coordinate system is formed. This process yields the transformation matrix for each profilometer (in our case, four transformation matrices. If the common coordinate system is the coordinate system of the first profilometer then one transformation matrix is unitary). This step completes the calibration method.

Example

Four Keyence LJ-X8400 laser profilometers were provided - the light source in these solutions is a blue semiconductor laser. A calibration standard 20, having thirteen reference points and shaped as shown in Fig. 2, was also provided. The calibration standard 20 was scanned using the four profilometers 11-14, so that six of the same reference points 21-26 are visible on scans taken by at least two of the four profilometers 11-14, obtaining images as in Fig. 4. Then, for each profilometer 11-14 on the corresponding scan (using the Hough transform for detecting circles), the position of reference points 21-26 in the three axes (X, Y, Z) was detected and their positions relative to a particular profilometer were determined in the local coordinate system of the profilometer in question, using the algorithm described above. The scanned reference points 21-26 were then sorted by assigning a label to each point in such a way that each scan comprises the same labels for the same reference point, wherein the sorting of the points is done along the Y axis (that is, along the axis of movement of the calibration standard since each profilometer scans the points in the same order). Finally, a transformation matrix was calculated for the coordinates of the reference points of each profilometer in order to transform these coordinates from the local coordinate system of each profilometer to the external coordinate system, which was established as the coordinate system of the first profilometer.

While the invention has been described with respect to a limited number of embodiments, it will be appreciated that many variations, modifications and other applications of the invention may be made. Therefore, the claimed invention as recited in the claims that follow is not limited to the embodiments described herein.

**Claims**

1. A method for calibrating a set of laser profilometers, comprising the steps of:

   - providing (41) at least two profilometers (11-14);
   - providing (42) a calibration standard (20) having at least six reference points (21-26);
   - scanning (43) the calibration standard (20) with the profilometers (11-14) such that at least six of the same reference points (21-26) are visible on scans made by at least two of the profilometers (11-14);
   - detecting (44) the position of the reference points (21-26) in the three axes (X, Y, Z) for each profilometer (11-14) on its corresponding scan, and defining their positions relative to the specified profilometer (11-14) in the local coordinate system of the particular profilometer;
   - sorting (45) the scanned reference points (21-26) by assigning a label to each point in such a way that each scan comprises the same labels for the same reference point (21-26); and
   - calculating (46) a transformation matrix for the coordinates of the reference points of each profilometer in order to transform these coordinates from the local coordinate system of each profilometer to the external coordinate system.

2. The method according to claim 1, comprising scanning the calibration standard (20) by moving it with a conveyor belt (30) in the Y axis relative to the profilometers (11-14), and sorting the scanned reference points (21-26) in the axis of movement (Y) of the calibration standard (20).

3. The method according to any of the preceding claims, wherein the reference points (21-26) have a circular shape.

4. The method according to any of the preceding claims, wherein the external coordinate system corresponds to one of the local coordinate systems of the specified profilometer.

11

12

14

13

20

Fig. 1A

14

13

Y

Fig. 1B

Fig. 1C

Fig. 2

Fig. 3

Fig. 4

Fig. 5

41

Providing profilometers

42

Providing calibration standard

43

Scanning the calibration standard
by profilometers

44

Detecting position of reference points
in a local coordinate system

45

Sorting and labeling reference points

46

Computing a transformation matrix
from the local coordinate system
to the external coordinate system

Fig. 6

Europäisches
Patentamt

European
Patent Office

Office européen
des brevets

# EUROPEAN SEARCH REPORT

Application Number

EP 23 21 5800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 991 437 A (MIGDAL ALEXANDER [US] ET AL) 23 November 1999 (1999-11-23) * column 26, line 51 - column 28, line 45; figure 11 * ----- | 1,3,4 | INV. G01B11/245 G01B21/04 G01B11/25 |
| X | EP 3 470 778 A1 (COGNEX CORP [US]) 17 April 2019 (2019-04-17) * paragraph [0048] - paragraph [0061]; figures 6-8 * ----- | 1,2 | |

TECHNICAL FIELDS
SEARCHED       (IPC)

G01B

The present search report has been drawn up for all claims

| Place of search | Date of completion of the search | Examiner |
|---|---|---|
| Munich | 12 April 2024 | Gomez, Adriana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 5800

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2024

| Patent document cited in search report | | Publication date | Patent family member(s) | | Publication date |
|---|---|---|---|---|---|
| US 5991437 | A | 23-11-1999 | AU | 3652497 A | 20-02-1998 |
| | | | US | 5991437 A | 23-11-1999 |
| | | | WO | 9805157 A2 | 05-02-1998 |
| EP 3470778 | A1 | 17-04-2019 | CN | 109672878 A | 23-04-2019 |
| | | | EP | 3470778 A1 | 17-04-2019 |

EPO FORM P0459

For more details about this annex : see Official Journal of the European Patent Office, No. 12/82

**EP 4 386 314 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105806309 B